# EUROPEAN PATENT APPLICATION

(11) **EP 4 481 874 A1**
(43) Date of publication of application: **25.12.2024**
(21) Application number: 24181047.2
(22) Date of filing: 10.06.2024
(51) Int. Cl.: H01M 10/0525, H01M 10/54

(54) **RECOVERY METHOD FOR NEGATIVE ELECTRODE ACTIVE MATERIAL, NEGATIVE ELECTRODE MATERIAL, AND SECONDARY BATTERY**

(30) Priority: 23.06.2023 JP 2023102890
(71) Applicant: Prime Planet Energy & Solutions, Inc., Chuo-ku Tokyo 103-0022 (JP)
(72) Inventor: TAKESHITA, Shuhei, Tokyo, 103-0022 (JP); OKUDA, Koji, Tokyo, 103-0022 (JP); SUZUKI, Shinya, Tokyo, 103-0022 (JP)
(74) Representative: Kuhnen & Wacker Patent- und Rechtsanwaltsbüro PartG mbB

(57) **Abstract**

The present disclosure relates to a reproduction method for obtaining a negative electrode active material with improved cycle characteristics from a secondary battery. The technology disclosed herein is a reproduction method for a negative electrode active material, including: a preparation step of preparing a secondary battery including a positive electrode, a negative electrode, an electrolyte, and a phosphorus-containing compound; a charging step of charging the secondary battery in a temperature environment that is at or above a decomposition temperature of the phosphorus-containing compound; and a recovery step of recovering a negative electrode active material from the negative electrode in the secondary battery obtained after the charging step.

## Description

### BACKGROUND

The present disclosure relates to a reproduction method for a negative electrode active material, a negative electrode material, and a secondary battery.

Secondary batteries are suitably used in a variety of applications, including drive power sources mounted on vehicles, such as hybrid electric vehicles (HEVs), plug-in hybrid electric vehicles (PHEVs), and electric vehicles (BEVs). The demand for these batteries is rapidly increasing. For this demand, consequently, there is also an increasing demand for technologies related to the reproduction of negative electrode active materials from secondary batteries. For example, Japanese Patent Application Publication No. 2006-228509 discloses the following technology as a technology related to the reproduction of a negative electrode active material. The technology involves taking out a negative electrode plate from a secondary battery, washing the negative electrode plate with a liquid containing water, separating the negative electrode plate into a current collector substrate and a negative electrode composite material containing a negative electrode active material and a binding agent, mixing the negative electrode composite material in a solvent that can dissolve or disperse the binding agent to fabricate a negative electrode paste, and then applying the paste onto a negative electrode current collector.

### SUMMARY

In recent years, improvement in cycle characteristics has been required for negative electrode active materials. The negative electrode active material recovered using the conventional technology as disclosed in Japanese Patent Application Publication No. 2006-228509 does not take cycle characteristics into consideration. Therefore, it cannot sufficiently meet the requirements for the cycle characteristics.

The technology disclosed herein has been made in view of the above circumstances and has an object to provide a reproduction method for obtaining a negative electrode active material with improved cycle characteristics from a secondary battery. Also, it has another object to provide a negative electrode active material with improved cycle characteristics and a secondary battery including the negative electrode active material.

The technology disclosed herein is a reproduction method for a negative electrode active material, including: a preparation step of preparing a secondary battery including a positive electrode, a negative electrode, an electrolyte, and a phosphorus-containing compound; a charging step of charging the secondary battery in a temperature environment that is at or above a decomposition temperature of the phosphorus-containing compound; and a recovery step of recovering a negative electrode active material from the negative electrode in the secondary battery obtained after the charging step.

According to such a configuration, the phosphorus-containing compound contained in the secondary battery is decomposed by charging the secondary battery under predetermined conditions. Consequently, a negative electrode active material with a decomposed substance of the phosphorus-containing compound disposed on its surface can be recovered. Therefore, the negative electrode active material with improved cycle characteristics can be reproduced.

### BRIEF DESCRIPTION OF THE DRAWINGS

FIG. 1 is a cross-sectional view schematically showing an internal structure of a secondary battery according to one embodiment.
FIG. 2 is a perspective view schematically showing an electrode assembly of the secondary battery according to the embodiment.
FIG. 3 is a flowchart for explaining a reproduction method according to one embodiment.
FIG. 4 is a flowchart for explaining sub-steps of a preparation step according to the embodiment.
FIG. 5 is a flowchart for explaining sub-steps of a recovery step according to the embodiment.
FIG. 6 is a schematic diagram showing a negative electrode active material (recovered negative electrode active material) obtained by the reproduction method for a negative electrode active material according to the embodiment.
FIG. 7 is a surface SEM-EDS image of the recovered negative electrode active material according to the embodiment.
FIG. 8 is a graph showing the relationship between the number of cycles and a capacity retention rate.

### DETAILED DESCRIPTION

Embodiments of the technology disclosed herein will be described below with reference to the drawings. Matters other than those specifically mentioned in the present specification that are necessary for implementing the technology disclosed herein may be understood as design matters of those skilled in the art based on the conventional technology in the field. The technology disclosed herein can be implemented based on the contents disclosed in the present specification and the technical common knowledge in the field.

In the following drawings, members and parts that have the same actions are denoted by the same symbols, and redundant explanations thereof may be omitted or simplified. In the present specification, the notation "A to B" for a range includes the meanings of "preferably more than A" and "preferably less than B", as well as the meaning of A or more and B or less. Note that in the present specification, the term "secondary battery" refers to an electricity storage device that can be repeatedly charged and discharged, and it is a term that encompasses so-called storage batteries and electricity storage elements such as electric double layer capacitors. The term "lithium-ion secondary battery" as used in the present specification refers to a secondary battery that uses lithium ions as charge carriers and in which charging and discharging are implemented by the transfer of charges along with lithium ions between positive and negative electrodes.

### 1. Preparation subjects

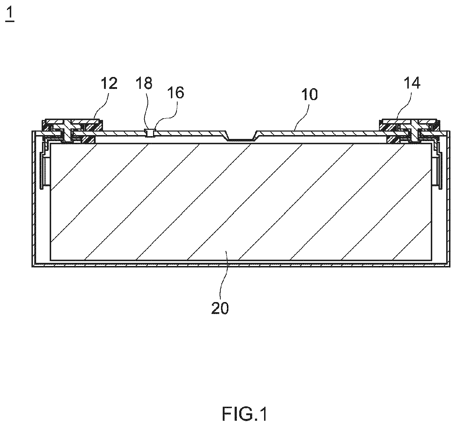

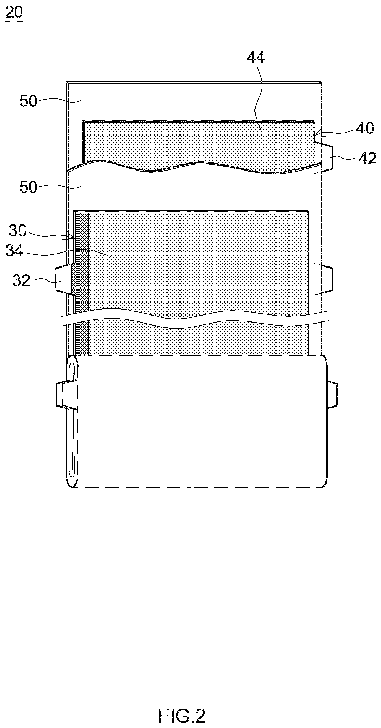

In the reproduction method for a negative electrode active material according to the present embodiment, a predetermined secondary battery is prepared, and a negative electrode active material is reproduced. An example of a preparation subject here is a used secondary battery. Hereinafter, this secondary battery will be specifically described. FIG. 1 is a longitudinal-sectional view schematically showing an internal structure of the secondary battery. FIG. 2 is a perspective view schematically showing an electrode assembly of the secondary battery shown in FIG. 1. As shown in FIG. 1, a secondary battery 1 includes a case 10, an electrode assembly 20, an electrolyte (not shown), and a phosphorus-containing compound (not shown).

### (1) Case

The case 10 is a box-shaped container. The case 10 houses therein the electrode assembly 20 and an electrolyte. The case 10 is made of, for example, a metallic material having a certain strength (e.g., aluminum (Al)). The case 10 can be provided with a pouring hole 16. The pouring hole 16 is a hole for pouring the electrolyte. After the electrolyte is poured, the pouring hole 16 is sealed by a sealing member 18. A positive electrode terminal 12 and a negative electrode terminal 14 are attached onto the case 10. The positive electrode terminal 12 and the negative electrode terminal 14 are connected to the electrode assembly 20 inside the case 10. Specifically, the positive electrode terminal 12 is connected to a positive electrode plate 30 (see FIG. 2) of the electrode assembly 20. Aluminum (Al) or the like is used for this positive electrode terminal 12. Meanwhile, the negative electrode terminal 14 is connected to a negative electrode plate 40 of the electrode assembly 20. Copper (Cu) or the like is used for this negative electrode terminal 14.

### (2) Electrode assembly

The electrode assembly 20 is a power generating element of the secondary battery 1. As shown in FIG. 2, the electrode assembly 20 has the positive electrode plate 30, the negative electrode plate 40, and a separator 50. The electrode assembly 20 shown in FIG. 2 is a wound electrode assembly. This wound electrode assembly is fabricated by stacking the positive electrode plate 30, negative electrode plate 40, and separator 50 to form a long strip-shaped stacked body and then winding the stacked body. However, the structure of the electrode assembly 20 is not particularly limited, and it may be any other conventionally known structure (such as a stacked electrode assembly). The positive electrode plate 30 is an example of the "positive electrode" disclosed herein, and the negative electrode plate 40 is an example of the "negative electrode" disclosed herein.

The positive electrode plate 30 includes a positive electrode substrate 32, which is made of a conductive metal foil, and a positive electrode active material layer 34 provided on a surface of the positive electrode substrate 32. Aluminum (Al) or the like is used for the positive electrode substrate 32. The positive electrode active material layer 34 is a composite material layer containing a positive electrode active material, a conductive material, a binder, and the like. The positive electrode active material is a particulate material that can reversibly absorb and release charge carriers. Examples of positive electrode active materials include lithium transition metal composite oxides such as lithium nickel composite oxides (e.g., LiNiO₂), lithium cobalt composite oxides (e.g., LiCoO₂), lithium nickel cobalt manganese composite oxides (e.g., LiNi_{1/3}Co_{1/3}Mn_{1/3}O₂), lithium nickel cobalt aluminum composite oxides (e.g., LiNi_{0.8}Co_{0.15}Al_{0.5}O₂), lithium manganese composite oxides (e.g., LiMn₂O₄), and lithium nickel manganese composite oxides (e.g., LiNi_{0.5}Mm_{1.5}O₄); and lithium transition metal phosphate compounds (e.g., LiFePO₄). Further, examples of conductive materials include carbon materials such as acetylene black and graphite. In addition, examples of binders include resin materials such as polyvinylidene fluoride (PVDF).

Meanwhile, the negative electrode plate 40 includes a negative electrode substrate 42, which is made of a conductive metal foil, and a negative electrode active material layer 44 provided on a surface of the negative electrode substrate 42. Copper (Cu) or the like is used for the negative electrode substrate 42. The negative electrode active material layer 44 is a composite material layer containing a negative electrode active material, a binder, a thickener, and the like. The negative electrode active material is a particulate material that can reversibly absorb and release charge carriers. Examples of negative electrode active materials as the preparation subject include carbon materials such as graphite, hard carbon, and soft carbon. The graphite may be natural graphite or artificial graphite. The negative electrode active material may also include lithium titanate (LTO), silicon carbide, a composite containing carbon and silicon (Si-C composite), silicon oxide (SiOx)-, and the like. Examples of binders include resin materials such as styrene-butadiene rubber (SBR). Examples of thickeners include resin materials such as carboxymethyl cellulose (CMC).

The separator 50 is an insulating sheet interposed between the positive electrode plate 30 and the negative electrode plate 40. For example, a resin material such as polyethylene (PE), polypropylene (PP), polyester, cellulose, or polyamide is used for the separator 50. A heat-resistant layer including an inorganic filler may be formed on a surface of the separator 50. Such inorganic fillers include inorganic oxides such as aluminum oxide, magnesium oxide, silicon oxide, and titanium oxide; nitrides such as aluminum nitride and silicon nitride; metal hydroxides such as calcium hydroxide, magnesium hydroxide, and aluminum hydroxide; clay minerals such as mica, talc, boehmite, zeolite, apatite, and kaolin; and the like.

### (3) Electrolyte

The electrolyte is present between the positive electrode plate 30 and the negative electrode plate 40. This allows the charge carriers to move between the positive electrode plate 30 and the negative electrode plate 40. Examples of electrolytes include a non-aqueous electrolyte and a gel electrolyte. Any electrolyte usable for secondary batteries can be used as the electrolyte without any particular restrictions. The electrolyte typically contains a solvent and a supporting salt. Various nonaqueous solvents usable in this type of secondary battery can be used as the solvent. Examples thereof include carbonate-based nonaqueous solvents such as ethylene carbonate (EC), diethyl carbonate (DEC), dimethyl carbonate (DMC), ethyl methyl carbonate (EMC), and the like. As the supporting salt, for example, lithium salts, sodium salts, magnesium salts, etc. (e.g., lithium salts in lithium-ion secondary batteries) can be used, depending on the type of secondary battery. Examples of lithium salts used as the supporting salt include fluorine-containing lithium salts such as LiPF₆ and LiBF₄, and LiClO₄. The concentration of the supporting salt is not particularly limited, but it is preferably about 0.7 mol/L or more and 1.3 mol/L or less. The electrolyte may contain components other than the solvent and supporting salt described above, for example, various additives such as gas generating agents, film forming agents, dispersants, and thickeners, as long as they do not significantly impair the effects of the present technology.

### (4) Phosphorus-containing compounds

The secondary battery 1 as the preparation subject according to the present embodiment is characterized by containing a phosphorus-containing compound. As described in detail later, by using the secondary battery 1 containing a phosphorus-containing compound as the preparation subject, the negative electrode active material with improved cycle characteristics can be reproduced. The phosphorus-containing compound may be contained, for example, as the electrolyte or may be contained separately from the electrolyte. In a case where the phosphorus-containing compound is contained as the electrolyte, for example, the phosphorus-containing compound can also serve as the supporting salt. The phosphorus-containing compound is, for example, a fluorophosphate. The fluorophosphate is preferably an alkali metal salt (fluorophosphate of an alkali metal). As the alkali metal, Li, Na and K are preferable, and Li is more preferable. Examples of fluorophosphates of alkali metals containing Li as the alkali metal include Li₂PO₃F (lithium monofluorophosphate), LiDFP (lithium difluorophosphate), LiPF₆ (lithium hexafluorophosphate), LiPFO (lithium difluorobis(oxalato)phosphate), and LiTFOP (lithium tetrafluoro(oxalato)phosphate). In some preferred embodiments, the secondary battery 1 preferably contains LiPF₆ as the phosphorus-containing compound. Among phosphorus-containing compounds, LiPF₆ has a tendency to decompose in a relatively high temperature environment. Thus, by containing LiPF₆ as the phosphorus-containing compound, the negative electrode active material with improved cycle characteristics can be reproduced more suitably.

The content of the phosphorus-containing compound is not particularly limited, but it is preferably 0.01 wt% or more, and more preferably 0.1 wt% or more, assuming that the entire electrolyte content is 100 wt%. This allows the phosphorus-containing oxide to suitably adhere to a surface of the negative electrode active material in a charging step S20 described later. On the other hand, the amount of phosphorus-containing compound added is not particularly limited, but it is preferably 20 wt% or less, and more preferably 16 wt% or less, assuming that the entire electrolyte content is 100 wt%.

The secondary battery 1 has been described above as an example of the preparation subject in the reproduction method according to the present embodiment. However, the reproduction method disclosed herein is not limited only to the method for preparing the secondary battery 1 with the above configuration as the preparation subject. That is, the preparation subject of the reproduction method disclosed herein only needs to include the positive electrode, the negative electrode, the electrolyte, and the phosphorus-containing compound, and is not particularly limited to a specific structure.

### 2. Reproduction method for negative electrode active material

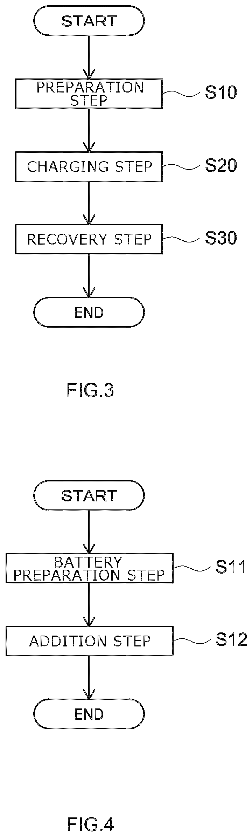

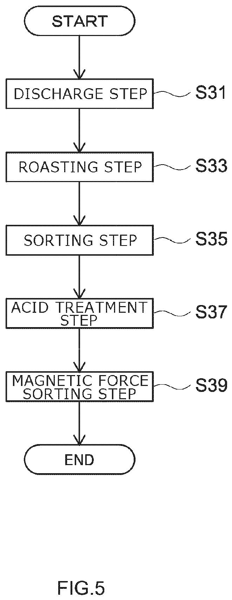

The reproduction method for a negative electrode active material according to the present embodiment will be described below. FIG. 3 is a flowchart for explaining a reproduction method according to one embodiment. FIG. 4 is a flowchart for explaining sub-steps of a preparation step S10 according to the embodiment. FIG. 5 is a flowchart for explaining sub-steps of a recovery step S30 according to the embodiment.

As shown in FIG. 3, the reproduction method for a negative electrode active material according to the present embodiment includes the preparation step S10, the charging step S20, and the recovery step S30. The reproduction method disclosed herein may further include other steps at any stages, with the remaining processes being identical to those in conventional methods. Each step will be described below.

### (1) Preparation step S10

In the preparation step, the secondary battery including the positive electrode, the negative electrode, the electrolyte, and the phosphorus-containing compound is prepared. Although not limited, the preparation step S10 may include, as sub-steps, a battery preparation step S11 and an addition step S12, as shown in FIG. 4. The sub-steps will be specifically described below.

### (1-1) Battery preparation step S11

In the battery preparation step S11, a secondary battery for reproducing a negative electrode active material is prepared. The secondary battery to be prepared here includes a positive electrode, a negative electrode, and an electrolyte. The secondary battery may or may not contain a phosphorus-containing compound at the time of the battery preparation step S11. Since the details of the secondary battery have already been described, redundant explanations thereof are omitted.

### (1-2) Addition step S12

In some preferred embodiments, the preparation step S10 can include the addition step S12 as a sub-step. In the addition step S12, a phosphorus-containing compound is added to the secondary battery 1 prepared in the battery preparation step S11.

When performing the addition step S12, the phosphorus-containing compound to be added can be the same as the phosphorus-containing compound described above as the preparation subject. The addition step S12 may be performed on a secondary battery that does not contain a phosphorus-containing compound, or on the secondary battery 1 that already contains the phosphorus-containing compound. In other words, the preparation step S10 includes adding a phosphorus-containing compound to a secondary battery that does not contain a phosphorus-containing compound, or further adding the phosphorus-containing compound to the secondary battery that contains the phosphorus-containing compound.

A method of adding a phosphorus-containing compound in the addition step S12 is not particularly limited. For example, the phosphorus-containing compound may be added through the pouring hole 16. Although not limited to this, it is preferable to discharge the secondary battery to an end-of-discharge voltage before the addition step S12. Because of this, the addition step S12 can be performed more safely. The addition step S12 is not mandatory and can be omitted. For example, in a case where the secondary battery contains the phosphorus-containing compound at the time of the preparation in the battery preparation step S11, the addition step S12 may be omitted.

### (2) Charging step S20

In the charging step S20, the secondary battery prepared in the preparation step S10 is charged. The charging step S20 is characterized by that the secondary battery is charged in a temperature environment that is at or above a decomposition temperature of the phosphorus-containing compound contained in the secondary battery 1. Consequently, the phosphorus-containing compound is decomposed, causing a decomposition product of the phosphorus-containing compound (typically, a phosphorus-containing oxide) to adhere to the surface of the negative electrode active material as the preparation subject.

The charging step S20 is performed in a temperature environment of preferably 60°C or higher, and more preferably 80°C or higher. Consequently, the phosphorus-containing compound contained in the secondary battery 1 is decomposed suitably. Therefore, the decomposition product of the phosphorus-containing compound (typically, the phosphorus-containing oxide) suitably adheres to the surface of the negative electrode active material as the preparation subject. The temperature at which the charging step S20 is performed is not particularly limited, but it is, for example, 100°C or lower, and preferably 90°C or lower.

In the charging step S20, it is preferable to ensure an amount of charge required to decompose the phosphorus-containing compound and to cause the decomposition product of the phosphorus-containing compound (typically, a phosphorus-containing oxide) to adhere to the surface of the negative electrode active material as the preparation subject. From this perspective, it is preferable to charge the secondary battery 1 until the state of charge (SOC) of the secondary battery 1 reaches 50% or more. It is more preferable to charge the secondary battery 1 until the SOC of the secondary battery 1 reaches 80% or more, and even more preferable to charge it until its SOC reaches 100% (rated voltage). The charging may be performed once or it can be repeated two or more times, for example, with discharging occurring in between.

The charge rate in the charging step S20 is preferably 0.1 C or less, and more preferably 0.05 C or less. Thus, the decomposition product of the phosphorus-containing compound (typically, a phosphorus-containing oxide) suitably adheres to the surface of the negative electrode active material as the preparation subject. The charge rate in the charging step S20 is not particularly limited, but is, for example, 0.001 C or more, and preferably 0.01 C or more.

### (3) Recovery step S30

In the recovery step S30, the negative electrode active material is recovered from the secondary battery that has passed through the charging step S20. A method of recovering the negative electrode active material related to the recovery step S30 is not particularly limited because the conventionally known techniques can be used. For example, as shown in FIG. 5, the recovery step S30 may include, as sub-steps, a discharge step S31, a roasting step S33, a sorting step S35, an acid treatment step S37, and a magnetic force sorting step S39. These steps will be specifically described below.

### (3-1) Discharge step S31

In the discharge step S31, the secondary battery is discharged to the end-of-discharge voltage. Consequently, the battery can cease its function. A method of performing the discharge step S31 can employ any technique used in conventional recovery techniques without any particular restrictions, and since it does not characterize the technology disclosed herein, a detailed description thereof is omitted. However, the discharge step S31 is not mandatory and can be omitted. For example, the function of the battery can also be ceased by implementing the roasting step S33 described later.

### (3-2) Roasting step S33

In the roasting step S33, the secondary battery is roasted at a predetermined temperature. Consequently, liquid components (electrolyte, etc.) in the subject to be recovered can be removed, and resin components (binder, separator, etc.) can be carbonized. In addition, the function of the battery can be ceased by implementing the roasting step S33. A method of performing the roasting step S33 can employ any technique used in conventional recovery techniques without any particular restrictions, and since it does not characterize the technology disclosed herein, a detailed description thereof is omitted.

### (3-3) Sorting step S35

In the sorting step S35, each member included in the secondary battery 1 is sorted. A method of performing the sorting step S35 can employ conventionally known methods, and enables sorting, for example, by use of sifting, visual inspection, or the like.

In the sorting step S35, a crushing process may be performed on the secondary battery 1 as needed. Consequently, crushed fragments of the secondary battery 1 can be obtained, leading to an improvement in the efficiency of sorting each member. For example, in a case where the secondary battery 1 is a subject to be recovered, the case 10 and the electrode assembly 20 should be crushed. This makes it easier to remove the case 10, negative electrode substrate 42, and positive electrode plate 30 from the secondary battery 1.

Although not limited to this, the crushed fragments of the secondary battery 1 obtained by the crushing process described above are sorted using a sieve. In this case, typically, metallic components (Al, Cu, etc.) mainly derived from the case 10, positive electrode substrate 32, and negative electrode substrate 42 remain on the sieve as coarse grains, while black mass from which the metallic components (Al, Cu, etc.) are almost removed is obtained as fine grains under the sieve. The black mass typically contains the negative electrode active material and the positive electrode active material (e.g., Ni, Co, etc.).

In the sorting step S35, the sorted black mass can be further sorted by a flotation beneficiation method. Consequently, any components (e.g., Ni, Co, etc.) present in the black mass, other than the negative electrode active material, can be almost completely removed. The flotation beneficiation method can employ known technologies such as multi-oil flotation, water surface flotation, and froth flotation without any particular restrictions.

### (3-4) Acid treatment step S37

In the acid treatment step S37, the black mass sorted in the sorting step S35 is mixed with an acidic solution. Consequently, metal elements (Al, Cu, Ni, Co, etc.) in the black mass dissolve in the acidic solution, while the negative electrode active material remains as a residue without dissolving in the acidic solution. Depending on the composition of a subject to be recovered and the composition of the acidic solution, some metallic elements (Fe, etc.) in the black mass may also remain as the residue without dissolving in the acidic solution. That is, the residue obtained in the acid treatment step S37 may contain, for example, Fe and the like in addition to the negative electrode active material. In this case, the metallic elements in the residue can be removed, for example, by the magnetic force sorting step S39 described later. A procedure of the acid treatment step S37 can adopt any conventionally known procedure without any particular restrictions. As an example, a suitable pH of the acid solution used in the acid treatment step S37 is -1.5 to 1.5 (more suitably, -0.5 to 0.5). Consequently, the metallic components in the black mass can be suitably dissolved. Specific examples of acid solutions include inorganic acids such as sulfuric acid, nitric acid, hydrochloric acid, and phosphoric acid, and organic acids such as citric acid, ascorbic acid, oxalic acid, and acetic acid. Although not limited to this, a reducing agent such as hydrogen peroxide can be added to the acidic solution in the acid treatment step S37. Thus, the metallic elements in the black mass can be suitably dissolved in the acidic solution, thus shortening a treatment time of the acid treatment step S37.

The acidic solution resulting from the acid treatment step S37 and the residue are subjected to solid-liquid separation by filtration or other means to obtain a residue containing the negative electrode active material. The solid-liquid separation method can adopt any conventionally known means without any particular restrictions. The acidic solution resulting from the solid-liquid separation can be used in various methods, including but not limited to conventionally known methods, thereby recovering metal elements (Ni, Co, etc.) present in the acidic solution.

### (3-5) Magnetic force sorting step S39

In the magnetic force sorting step S39, the residue obtained in the acid treatment step S37 is sorted using magnetic force. This enables sorting of the negative electrode active material as non-magnetized material of the residue and magnetized material (metallic component). That is, in the magnetic force sorting step S39, the negative electrode active material according to the present embodiment can be obtained. The magnetic force sorting step S39 can adopt conventionally known procedures without any particular restrictions.

The reproduction method for a negative electrode active material according to the present embodiment has been described above. The reproduction method according to the present embodiment, which includes the preparation step S10, the charging step S20, and the recovery step S30 as described above, can obtain, as the preparation subject, the negative-electrode active material with a decomposition product of the phosphorus-containing compound (typically, phosphorus-containing oxide) adhering to the surface of the negative-electrode active material (hereinafter referred to as an "active material base"). Therefore, according to the reproduction method for a negative electrode active material of the present embodiment, the negative-electrode active material with excellent cycle characteristics can be obtained.

### 3. Recovered negative electrode active material

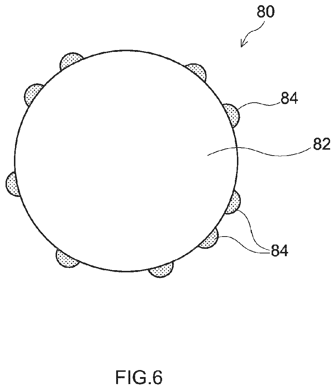

The negative electrode active material obtained by the reproduction method for a negative electrode active material (hereinafter referred to as the "recovered negative electrode active material") according to the present embodiment is the negative electrode active material as the preparation subject (hereinafter referred to as an "active material base") with the phosphorus-containing oxide adhering to its surface. That is, this negative electrode active material is different from the negative-electrode active material included in the secondary battery 1 prepared in the preparation step S10. The features of a recovered negative electrode active material 80 will be described in detail below. FIG. 6 is a schematic diagram showing the negative electrode active material (recovered negative electrode active material 80) obtained by the reproduction method for a negative electrode active material according to one embodiment. As shown in FIG. 6, the recovered negative electrode active material 80 includes an active material base 82 and a phosphorus-containing oxide 84. One example of the recovered negative electrode active material 80 is a "negative electrode active material including a carbon material and a phosphorus-containing oxide disposed on the surface of the carbon material".

The active material base 82 corresponds to the negative electrode active material as the preparation subject. That is, the active material base 82 is a particulate material that can reversibly absorb and release charge carriers. The active material base used is typically a carbon material such as graphite, hard carbon, or soft carbon. The graphite may be natural or artificial graphite.

An average particle diameter (median diameter: D50) of the active material base 82 is not particularly limited, but is, for example, 0.1 µm or more and 50 µm or less, preferably 1 µm or more and 25 µm or less. The average particle diameter (D50) of the active material base 82 can be determined, for example, by a laser diffraction scattering method.

The phosphorus-containing oxide 84 is formed by decomposing the phosphorus-containing compound in the secondary battery 1 in the charging step S20 and allowing the decomposed compound to be disposed as the phosphorus-containing oxide 84 on the surface of the active material base 82 (the surface of the negative electrode active material as the preparation subject). The phosphorus-containing oxide 84 acts like a film called a Solid Electrolyte Interface (SEI) film. In detail, the phosphorus-containing oxide 84 disposed on the surface of the active material base 82 stabilizes the recovered negative electrode active material 80 and thus suppresses the decomposition of the electrolyte. Therefore, according to the reproduction method according to the present embodiment, the negative electrode active material with high cycle characteristics can be obtained.

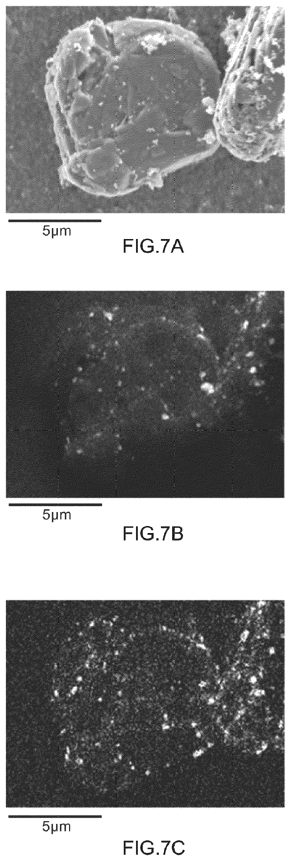

The phosphorus-containing oxide 84 disposed on the surface of the active material base 82 can be measured, for example, by a scanning electron microscope (SEM) and energy dispersive X-ray spectroscopy (EDS) (SEM -EDS). That is, the present state of the phosphorus-containing oxide 84 in the recovered negative electrode active material 80 can be ascertained by the SEM-EDS. FIG. 7 is a surface SEM-EDS image of the recovered negative electrode active material according to one embodiment. FIGS. 7(A), 7(B), and 7(C) show a surface SEM image of the recovered negative electrode active material, mapping of oxygen (O) therein, and mapping of phosphorus (P) therein, respectively. Light-colored areas (bright areas) in FIG. 7(B) show the locations of presence of O atoms, whereas light-colored areas (bright areas) in FIG. 7(C) show the locations of presence of P atoms. As can be seen from FIGS. 7(A) to 7(C), it has been found that the P and O atoms are present on the surface of the recovered negative electrode active material. In this way, it can be confirmed that the phosphorus-containing oxide is disposed on the surface of the active material base.

Elements other than P and O may be disposed on the surface of the recovered negative electrode active material 80 to the extent that they do not significantly interfere with the effects of the present disclosure. For example, elements such as silicon (Si) and sulfur (S) can be disposed.

In the recovered negative electrode active material 80, the average mass ratio of the mass of a phosphorus (P) element to the total mass of elements detected by elemental mapping obtained by the SEM-EDS, is preferably 0.2 mass% or more, more preferably 0.4 mass% or more, even more preferably 0.6 mass% or more, and much more preferably 1.0 mass% or more. The higher the average mass ratio of the phosphorus (P) element, the more suitably the phosphorus-containing oxide 84 is disposed on the surface of the active material base 82. In other words, the higher the average mass ratio of the phosphorus (P) element, the more suitably the cycle characteristics of the recovered negative electrode active material 80 are improved. The upper limit of the average mass ratio of the mass of the phosphorus (P) element to the total mass of the elements detected by the elemental mapping obtained by the SEM-EDS in the recovered negative electrode active material 80 is not particularly limited, but can be, for example, 10 mass% or less, and is preferably 5 mass% or less.

The "average mass ratio of the mass of the phosphorus (P) element to the total mass of the elements detected by the elemental mapping obtained by the SEM-EDS" in the present specification can be measured by the following procedure. First, an SEM image of the surface of the recovered negative electrode active material 80 is obtained. At this time, the SEM image is obtained (imaged) by adjusting the field of view such that one entire particle of the recovered negative electrode active material 80 is present within an imaging area. Then, EDS analysis is performed on the acquired SEM image to obtain the mass ratio (mass %) of each element, assuming that the total mass of the elements detected in one particle of the negative electrode active material is 100 mass %. At this time, the mass ratio (mass %) of the phosphorus (P) element can also be obtained. Specifically, it can be determined by performing such analysis on 10 or more particles (n ≥ 10) of the recovered negative electrode active material 80, and calculating an average mass ratio.

As another aspect of the technology disclosed herein, a negative electrode active material of the above embodiment (recovered negative electrode active material) is provided. Specifically, there is provided the negative electrode active material including a carbon material and a phosphorus-containing oxide disposed on a surface of the carbon material, wherein in the negative electrode active material, an average mass ratio of the mass of a phosphorus element to the total mass of the elements detected by the elemental mapping obtained by the SEM-EDS, is 0.2 mass% or more. Thus, the negative electrode active material with improved cycle characteristics is provided.

As another aspect of the technology disclosed herein, a secondary battery is provided. The secondary battery disclosed herein includes a negative electrode including a negative electrode active material, a positive electrode, and an electrolyte. The negative electrode contains the negative electrode active material of the above embodiment (recovered negative electrode active material) as the negative electrode active material. Specifically, the negative electrode contains the negative electrode active material, which includes a carbon material and a phosphorus-containing oxide disposed on a surface of the carbon material. In the negative electrode active material, an average mass ratio of the mass of a phosphorus element to the total mass of the elements detected by elemental mapping obtained by the SEM-EDS is 0.2 mass% or more. Thus, the secondary battery with improved cycle characteristics is provided. Note that the negative electrode may contain other negative electrode active materials in addition to the negative electrode active material of the above embodiment (recovered negative electrode active material) to the extent that they do not significantly interfere with the effects of the present disclosure. The electrolyte may or may not contain a phosphorus-containing compound. Note that other configurations of the secondary battery may be the same as those of the secondary battery that has been described above as the preparation subject, and redundant explanations thereof are omitted as they have already been described.

The shape of the secondary battery disclosed herein is not limited to a rectangular shape, but it may be coin-shaped, button-shaped, cylindrical, or the like. It can also be configured as a secondary battery with a laminated case.

The embodiment of the technology disclosed herein has been described above. The technology disclosed herein is not limited to the embodiment described above, but includes various other embodiments with modified configurations.

### <Applications of Secondary Battery>

The secondary battery including the negative electrode active material described above is usable for various applications. Because of excellent thermal stability with high capacity, the secondary battery can be suitably used, for example, as a motor power source (e.g., a drive power source) to be installed on vehicles, such as passenger cars and trucks. The vehicle is not limited to a particular type, and may be, for example, a Plug-in Hybrid Electric Vehicle (PHEV), a Hybrid Electric Vehicle (HEV), a Battery Electric Vehicle (BEV), or the like. The secondary batteries can be suitably used to configure an assembled battery, in which plural secondary batteries are arranged in a predetermined array direction, and a load is applied to them from the array direction by a restraining mechanism.

Examples related to the technology disclosed herein will be described below, but they are not intended to limit the technology disclosed herein to that shown in such examples.

### [Preparation of Secondary Battery]

### (Example 1)

First, a secondary battery was prepared in which an electrode assembly including a positive electrode plate, a negative electrode plate, and a separator and an electrolyte were housed in a case.

The positive electrode plate was prepared, which included a positive electrode active material layer attached on a surface of a positive electrode substrate made of aluminum, the positive electrode active material layer containing LiNi_{1/3}Co_{1/3}Mn_{1/3}O₂ (lithium nickel cobalt manganese composite oxide) as a positive electrode active material.

The negative electrode plate was prepared, which included a negative electrode active material layer on a surface of a copper negative electrode substrate, the negative electrode active material layer containing natural graphite as a negative electrode active material.

The electrolyte was prepared by dissolving LiPF₆ as a supporting salt at a concentration of 1 mol/L in a mixed solvent containing ethylene carbonate (EC), dimethyl carbonate (DMC) and ethyl methyl carbonate (EMC) at a volume ratio of EC : DMC : EMC = 30 : 30 : 40. That is, in Example 1, a secondary battery was prepared in which a phosphorus-containing compound (LiPF₆) was contained as the supporting salt in the electrolyte.

### [Charging]

Constant-current constant-voltage (CCCV) charging was performed on the secondary battery prepared above at a charge rate of 0.1 C in a temperature environment of 60°C until its SOC at an end-of-charge was 100%.

### [Recovery of Negative Electrode Active Material]

The secondary battery after the charging was discharged to the end-of-discharge voltage. Thereafter, the secondary battery was disassembled, and the negative electrode plate (negative electrode) was removed. The negative electrode active material layer was peeled off from the negative electrode plate by washing with water. The negative electrode active material was recovered from the negative electrode active material layer and dried at 100°C to remove water. The powdered negative electrode active material was recovered in this way.

### (Examples 2 to 4)

In Examples 2 to 4, secondary batteries with the same configuration as in Example 1 were prepared. In the charging step, the constant-current constant-voltage (CCCV) charging was performed at a charge rate of 0.1 C in a temperature environment of 80°C to its SOC (SOC at the end-of-charge) shown in Table 1. The negative electrode active materials according to Examples 2 to 4 were recovered in the same manner as in Example 1, except for this point.

### (Example 5)

In Example 5, a secondary battery was prepared in the same manner as in Example 1, except that an electrolyte was prepared by dissolving LiBF₆ instead of LiPF₆ as the supporting salt at a concentration of 1 mol/L, and that 1 wt% of lithium difluorobis(oxalato)phosphate (LiPFO) was added to the entire electrolyte. Thus, a secondary battery was prepared with the same configuration as in Example 1, except for these points. In Example 5, the constant-current constant-voltage (CCCV) charging was performed at a charge rate of 0.1C in a temperature environment of 80°C until the SOC at the end-of-charge was 100%. The negative electrode active material was recovered in the same manner as in Example 1, except for this point.

### (Example 6)

In Example 6, a secondary battery with the same configuration as in Example 1 was prepared. In Example 6, a charging step was not performed. The negative electrode active material was recovered in the same manner as in Example 1, except for this point.

### [Evaluation of Recovered Negative Electrode Active Material]

The recovered negative electrode active materials of Examples 1 to 6 (hereinafter also referred to as "recovered negative electrode active materials") were evaluated for the mass ratio of a phosphorus element in the recovered negative electrode active material. Specifically, first, SEM images of the recovered negative electrode active materials (recovered negative electrode active materials) were obtained using a scanning electron microscope (JSM-IT800) manufactured by JEOL Ltd. At that time, the image was taken in the field of view that allows one particle of the recovered negative electrode active material to be present within an imaging area. The mass ratio (mass%) of the mass of a phosphorus element to the total mass of the elements, which was detected by EDS analysis to be 100 mass%, was measured for each particle using an energy dispersive X-ray spectroscopy (EDS) device, manufactured by Oxford Instruments Plc. Such measurement was performed for 10 particles (n = 10) in each Example, and an average value of the mass ratios was calculated as the mass ratio of the phosphorus element according to each Example. The results are shown in Table 1.

### [Fabrication of Coin Cells for Evaluation]

In order to evaluate the performance of the recovered negative electrode active material, a coin cell was fabricated here as a single-pole cell having a negative electrode as a working electrode and a metallic lithium member as a counter electrode, which were arranged to face each other. First, the negative electrode was fabricated using the recovered negative electrode active material. Specifically, a negative electrode paste was prepared by mixing the recovered negative electrode active material, styrene butadiene rubber (SBR) as a binder, and carboxymethyl cellulose (CMC) as a thickener with ion-exchanged water as a solvent such that the mass ratio of solid contents of the recovered negative electrode active material : SBR : CMC was 98 : 1 : 1. The negative electrode paste was applied to one surface of a long sheet-shaped copper foil (10 µm thick) as a negative electrode substrate (negative electrode current collector), dried, and pressed by a roll press machine to fabricate a sheet-shaped negative electrode.

A porous polyolefin sheet with a thickness of 24 µm thick that has a three-layer structure of PP/PE/PP was used as the separator. Note that the used separator had a ceramic layer (4 µm thick), including alumina (Al₂O₃), boehmite, or the like, applied to one of its surfaces.

The electrolyte was prepared by dissolving LiPF₆ as the supporting salt at a concentration of 1.0 mol/L in a mixed solvent containing ethylene carbonate (EC), dimethyl carbonate (DMC) and ethyl methyl carbonate (EMC) at a volume ratio of 30 : 30 : 40.

The negative electrode, separator, and metallic lithium were stacked in this order and then impregnated with the electrolyte to fabricate a coin cell. At this time, the ceramic layer of the separator and the negative electrode are stacked to face each other.

### [Evaluation of Capacity Retention Rate (Cycle Characteristics)]

Using the coin cells for evaluation obtained above, capacity retention rates of the recovered negative electrode active materials according to Examples 1 to 6 were evaluated. The higher the value of the capacity retention rate, the better the cycle characteristics are considered to be. Specifically, each coin cell for evaluation was placed in an environment of 25°C, charged at a current rate of 1C up to 3 mV, further charged at a constant voltage of 3 mV until its current value reaches 1/10 of the current rate, and then caused to pause for 10 minutes. Next, the coin cell was discharged at a current rate of 1C to 1.6 V, further discharged at a constant voltage of 1.6 V until its current value reaches 1/10 of the current rate, and then caused to pause for 10 minutes. The above charging and discharging were set as one cycle and repeated for 10 cycles. In this case, a discharge capacity was measured for each cycle from the first cycle to the tenth cycle. The discharge capacity in the first cycle and the discharge capacity in the tenth cycle were measured, and thereby the capacity retention rate was determined using the following formula (1). The results are shown in Table 1. Capacity retention rate (%) = ((Discharge capacity in 10th cycle) / (Discharge capacity in 1st cycle)) × 100

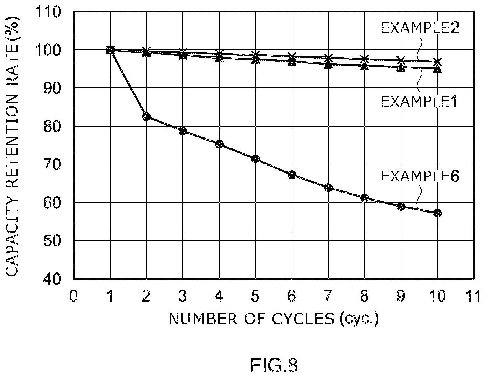

FIG. 8 is a graph showing the relationship between the number of cycles and the capacity retention rate. In Examples 1, 2, and 6, for a test of the capacity retention rate described above, the capacity retention rate was calculated for each cycle by being compared with that in the first cycle and plotted on a graph with the number of cycles on a horizontal axis and the capacity retention rate (%) on a vertical axis. The results are shown in FIG. 8.

**[Table 1]**

| Table 1 | | | | | |
|---|---|---|---|---|---|
| | Charging step | | | Recovered negative electrode active material | |
| | Phosphorus-containing compound | Charging temperature (°C) | End-of-charge SOC (%) | P mass ratio (%) | Capacity retention rate (%) |
| Example 1 | LiPF₆ | 60 | 100 | 0.40 | 95 |
| Example 2 | LiPF₆ | 80 | 100 | 1.00 | 97 |
| Example 3 | LiPF₆ | 80 | 50 | 0.20 | 90 |
| Example 4 | LiPF₆ | 80 | 80 | 0.60 | 96 |
| Example 5 | LiPFO | 80 | 100 | 0.50 | 96 |
| Example 6 | LiPF₆ | - | - | 0.05 | 58 |

As shown in the results of Table 1, the P mass ratio in the recovered negative electrode active material in Example 1, where the charging step was performed on the secondary battery containing a phosphorus-containing compound, was higher than that in Example 6, where the charging step was not performed. From this, it has been found that in Example 1, by performing the charging, the negative electrode active material with the phosphorus-containing oxide adhered to the surface of the active material base was obtained. Furthermore, as shown in the results of FIG. 8, the coin cell using the negative electrode active material of Example 6 demonstrated a decrease in the capacity retention ratio reduced with each cycle. On the other hand, the decrease in capacity retention per cycle in the coin cell in Example 1 was much less than in Example 6. From this, it has been found that the cycle characteristic of the negative electrode active material was improved by the phosphorus-containing oxide adhering to the surface of the active material base.

The results of Examples 1 and 2 show that in Example 2 where the charging step was performed in a temperature environment of 80°C, the P mass ratio in the recovered negative electrode active material was larger and the capacity retention rate was better.

The results of Examples 2 to 4 show that as the SOC at the end-of-charge increased, the P mass ratio on the surface of the negative electrode active material became larger, and the capacity retention rate was improved. The result of Example 3 shows that even when the SOC at the end-of-charge was set to 50%, a phosphate could suitably adhere to the surface of the negative electrode active material, and the capacity retention rate could be improved.

The result of Example 5 shows that even when a phosphorus-containing compound (LiPFO) was added to a secondary battery that does not include any phosphorus-containing compounds, the P mass ratio in the recovered negative electrode active material increased, and the capacity retention rate was better.

As described above, the specific aspects of the technology disclosed herein are those described in the following respective items.
Item 1: A reproduction method for a negative electrode active material, comprising:
   a preparation step of preparing a secondary battery including a positive electrode, a negative electrode, an electrolyte, and a phosphorus-containing compound;
   a charging step of charging the secondary battery in a temperature environment that is at or above a decomposition temperature of the phosphorus-containing compound; and
   a recovery step of recovering a negative electrode active material from the negative electrode in the secondary battery obtained after the charging step.
Item 2: The reproduction method for a negative electrode active material according to Item 1, wherein the preparation step includes:
   adding the phosphorus-containing compound to a secondary battery that does not include the phosphorus-containing compound, or
   further adding the phosphorus-containing compound to the secondary battery including the phosphorus-containing compound.
Item 3: The reproduction method for a negative electrode active material according to Item 1 or 2, wherein the charging step is performed at a charge rate of 0.1 C or less.
Item 4: The reproduction method for a negative electrode active material according to any one of Items 1 to 3, wherein the charging step is performed until a state of charge of the secondary battery is 50% or more.
Item 5: The reproduction method for a negative electrode active material according to any one of Items 1 to 4, wherein the charging step is performed in a temperature environment of 60°C or higher.
Item 6: The reproduction method for a negative electrode active material according to any one of Items 1 to 5, wherein the secondary battery includes LiPF₆ as the phosphorus-containing compound.
Item 7: A negative electrode active material, comprising:
   a carbon material; and
   a phosphorus-containing oxide disposed on a surface of the carbon material, wherein
   in the negative electrode active material, an average mass ratio of a mass of a phosphorus element to a total mass of elements detected by elemental mapping obtained by a scanning electron microscope and energy dispersive X-ray spectroscopy is 0.2 mass% or more. Item 8: A secondary battery comprising: a negative electrode including the negative electrode active material according to Item 7; a positive electrode; and an electrolyte.

## Claims

1. A reproduction method for a negative electrode active material (80), comprising:
a preparation step (S10) of preparing a secondary battery (1) including a positive electrode (30), a negative electrode (40), an electrolyte, and a phosphorus-containing compound;
a charging step (S20) of charging the secondary battery (1) in a temperature environment that is at or above a decomposition temperature of the phosphorus-containing compound; and
a recovery step (S30) of recovering a negative electrode active material (80) from the negative electrode (40) in the secondary battery (1) obtained after the charging step (S20).

2. The reproduction method for a negative electrode active material (80) according to claim 1, wherein
the preparation step (S10) includes:
adding the phosphorus-containing compound to a secondary battery (1) that does not include the phosphorus-containing compound, or
further adding the phosphorus-containing compound to the secondary battery (1) including the phosphorus-containing compound.

3. The reproduction method for a negative electrode active material (80) according to claim 1 or 2, wherein the charging step (S20) is performed at a charge rate of 0.1 C or less.

4. The reproduction method for a negative electrode active material (80) according to any one of claims 1 to 3, wherein the charging step (S20) is performed until a state of charge of the secondary battery (1) is 50% or more.

5. The reproduction method for a negative electrode active material (80) according to any one of claims 1 to 4, wherein the charging step (S20) is performed in a temperature environment of 60°C or higher.

6. The reproduction method for a negative electrode active material (80) according to any one of claims 1 to 5, wherein the secondary battery (1) includes LiPF₆ as the phosphorus-containing compound.

7. A negative electrode active material (80) comprising:
a carbon material (82); and
a phosphorus-containing oxide (84) disposed on a surface of the carbon material (82), wherein
in the negative electrode active material (80), an average mass ratio of a mass of a phosphorus element to a total mass of elements detected by elemental mapping obtained by a scanning electron microscope and energy dispersive X-ray spectroscopy is 0.2 mass% or more.

8. A secondary battery (1) comprising:
a negative electrode (40) including the negative electrode active material (80) according to claim 7; a positive electrode (30); and an electrolyte.
